# EUROPEAN PATENT APPLICATION

(11) **EP 4 822 538 A1**
(43) Date of publication of application: **14.10.2026**
(21) Application number: 25196946.5
(22) Date of filing: 20.08.2025
(51) Int. Cl.: G06F 11/07, B60W 50/02, G07C 5/08

(54) **DEVICE AND METHOD FOR DETECTING MALFUNCTION OF CONTROL DEVICE AND OBTAINING MALFUNCTION-RELATED INFORMATION**

(30) Priority: 10.04.2025 KR 20250046703
(71) Applicant: Hyundai Mobis Co., Ltd., Gangnam-gu Seoul 06141 (KR)
(72) Inventor: Lee, Min, 16891 Yongin-si, Gyeonggi-do (KR)
(74) Representative: Jung, Minkyu

(57) **Abstract**

Proposed is a control device for reporting a malfunction related to vehicle control. The control device includes a transceiver that transmits malfunction-related data, a memory that stores information related to a predefined malfunction list and one or more internal variables corresponding to each malfunction, and a processor that detects whether a malfunction included in the predefined malfunction list has occurred, obtains values of one or more internal variables corresponding to the detected malfunction upon the detection of the occurrence of the malfunction, and transmits the obtained values of the one or more internal variables to another device.

## Description

This application claims the benefit of earlier filing dates and right of priority to Korean Application No. 10-2025-0046703, filed on April 10, 2025, the contents of which are hereby incorporated by reference herein in their entirety.

### BACKGROUND OF THE DISCLOSURE

### Field of the Disclosure

The present disclosure relates to a device for detecting a malfunction of a control device and obtaining malfunction-related information and a method therefor. More specifically, the present disclosure relates to a device that matches each predefined malfunction of a control device with information related thereto, and when a malfunction of the control device is detected, transmits information related to the detected malfunction, and a method therefor.

### Discussion of the Related Art

An electronic control system of a vehicle is continuously developing. Accordingly, a role of a body domain controller (BDC), which comprehensively controls various functions within the vehicle, is becoming more important. The BDC controls various body-related functions such as door locking and unlocking, lighting system control, window and sunroof control, a vehicle security and alarm system, a vehicle access and ignition system, and the like, and exchanges information with another electronic control unit (ECU) via a controller area network (CAN) communication.

Because the BDC operates in association with numerous sensors and actuators within the vehicle, complexity of hardware and software is increasing. In particular, as the functions of the vehicle transition towards being software-centric, a control logic is becoming more diverse, and as a performance of the control device progresses, a more precise operation is required. However, along with such development, a problem of difficulty in detecting a malfunction of the BDC is emerging.

In general, the electronic control system of the vehicle records a diagnostic trouble code (DTC) via a diagnostic function and senses an abnormal state using the same. However, it is often difficult to identify exact causes of intermittent BDC malfunctions with only the recording of the DTC code. For example, problems such as a signal error that occurs only under a specific condition or a temporary communication failure may not result in immediate DTC recording, or it may be difficult to accurately analyze causes of the problems using only the recorded code. In addition, it is not easy to reproduce such a malfunction, so that a process of finding the root cause of the problem and devising a countermeasure requires considerable time and cost.

As such, when the BDC malfunctions occur intermittently or are difficult to reproduce, it is difficult to perform sufficient analysis with only an existing DTC-based diagnosis method. This problem is emerging as an increasingly important task to solve as softwareization is accelerated in relation to vehicle control and the role of the BDC is increasingly expanded. Accordingly, a need for a technology capable of more precise malfunction detection and analysis is increasing.

### SUMMARY OF THE DISCLOSURE

Based on the aforementioned background, the present disclosure proposes a device designed to detect a malfunction of a control device and obtain information related to the detected malfunction.

Problems to be solved by the present disclosure are not limited to the problems described above. Other problems not described above may be understood by a person skilled in the art from a description of the present disclosure below.

In a general aspect, a control device for reporting a malfunction related to vehicle control, includes: a transceiver configured to transmit and receive malfunction-related data; a memory configured to store information related to a predefined malfunction list and one or more internal variables corresponding to each malfunction in the predefined malfunction list; and a processor configured to detect whether a malfunction included in the predefined malfunction list has occurred, obtain values of one or more internal variables corresponding to the detected malfunction upon the detection of the occurrence of the malfunction, and transmit the obtained values of the one or more internal variables to another device, wherein each malfunction in the predefined malfunction list is set to correspond to one or more internal variables, and wherein the one or more internal variables include at least one variable defined or used in a computational process for the vehicle control of the control device.

The processor may be further configured to utilize the obtained values of the one or more internal variables to analyze the malfunction.

The processor may be further configured to update at least one of the predefined malfunction list, the one or more internal variables corresponding to the malfunction, or a condition for detecting the occurrence of the malfunction.

The processor may be further configured to detect whether the malfunction has occurred based on values of the one or more internal variables corresponding to each malfunction or a change in the values of the one or more internal variables.

The processor may be further configured to detect whether the malfunction has occurred based on a state of a driver or a component corresponding to each malfunction.

In another general aspect, a control device for reporting a malfunction related to vehicle control, includes: a transceiver configured to transmit and receive malfunction-related data; a memory configured to store information related to a predefined malfunction list and a trigger signal or one or more internal variables corresponding to each malfunction in the predefined malfunction list; and a processor configured to control the transceiver to transmit a trigger signal for an internal variable request corresponding to the malfunction to a central communication device, receive a request for one or more internal variables related to a malfunction corresponding to the trigger signal from the central communication device, obtain values of the requested one or more internal variables, and control the transceiver to transmit the obtained values of the internal variables to the central communication device, wherein each malfunction in the predefined malfunction list is set to correspond to one or more internal variables, and wherein the one or more internal variables include at least one variable defined or used in a computational process for the vehicle control of the control device.

The processor may be further configured to utilize the obtained values of the one or more internal variables to analyze the malfunction.

The processor may be further configured to update at least one of the predefined malfunction list, the one or more internal variables corresponding to the malfunction, or a condition for detecting the occurrence of the malfunction.

The processor may be further configured to detect whether the malfunction has occurred based on values of the one or more internal variables corresponding to each malfunction or a change in the values of the one or more internal variables.

The processor may be further configured to detect whether the malfunction has occurred based on a state of a driver or a component corresponding to each malfunction.

In yet another general aspect, a communication device for reporting a malfunction related to vehicle control, includes: a transceiver configured to transmit and receive malfunction-related data; a memory configured to store information related to a signal for triggering a malfunction-related internal variable request and one or more malfunction-related internal variables corresponding to the signal; and a processor configured to control the transceiver to receive the signal for triggering the malfunction-related internal variable request from a control device, identify a malfunction indicated by the received signal or one or more internal variables related to the malfunction, control the transceiver to transmit a request for the one or more internal variables to the control device, and control the transceiver to receive values of the one or more internal variables from the control device, wherein the malfunction is set to correspond to one or more internal variables, and wherein the one or more internal variables include at least one variable defined or used in a computational process for the vehicle control of the control device.

The processor may be further configured to utilize the values of the one or more internal variables to analyze the malfunction.

The solutions of the present disclosure described above are a part of the embodiments of the present disclosure. Various solutions other than the solutions described above may be derived and understood based on a detailed description of the present disclosure to be described below.

The present disclosure has following effects.

The present disclosure may efficiently improve the procedures of collecting the data regarding the malfunction, analyzing the malfunction, establishing the countermeasure, and the like by transmitting the information regarding the malfunction of the control device to the external server or the like.

In addition, the present disclosure may analyze the error in the data processing process within the control device by analyzing the internal variables in the data processing process within the control device related to the malfunction of the control device, rather than relying on the simple recording of the DTC code.

Effects of the present disclosure are not limited to the effects described above. Other effects not described above may be understood by those skilled in the art from a description of the present disclosure below.

### BRIEF DESCRIPTION OF THE DRAWINGS

The attached drawings, which are included as part of the detailed description to help understanding of the present disclosure, provide embodiments of the present disclosure and illustrate contents of the present disclosure together with the detailed description.
FIG. 1 is an overall block diagram of an autonomous driving vehicle to which an autonomous driving apparatus is applicable.
FIG. 2 is a diagram illustrating an example in which an autonomous driving apparatus is applied to a vehicle.
FIG. 3 illustrates operations related to detection of a malfunction of a control device and obtaining and transmission of internal variables based on the detected malfunction according to a first embodiment of the present disclosure.
FIG. 4 is a flowchart illustrating a method for detecting a malfunction of a control device and obtaining and transmitting internal variables based on the detected malfunction according to a first embodiment of the present disclosure.
FIG. 5 illustrates operations related to detection of a malfunction of a control device and obtaining and transmission of internal variables based on the detected malfunction according to a second embodiment of the present disclosure.
FIG. 6 is a flowchart illustrating a method for detecting a malfunction of a control device and obtaining and transmitting internal variables based on the detected malfunction according to a second embodiment of the present disclosure.
FIG. 7 illustrates a block diagram of a control device related to an embodiment of the present disclosure.
FIG. 8 illustrates a block diagram of a communication device related to an embodiment of the present disclosure.

### DETAILED DESCRIPTION OF THE DISCLOSURE

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "occupant", "passenger", "driver", "user", etc. are mentioned for description of the present disclosure, and may be used interchangeably therewith.

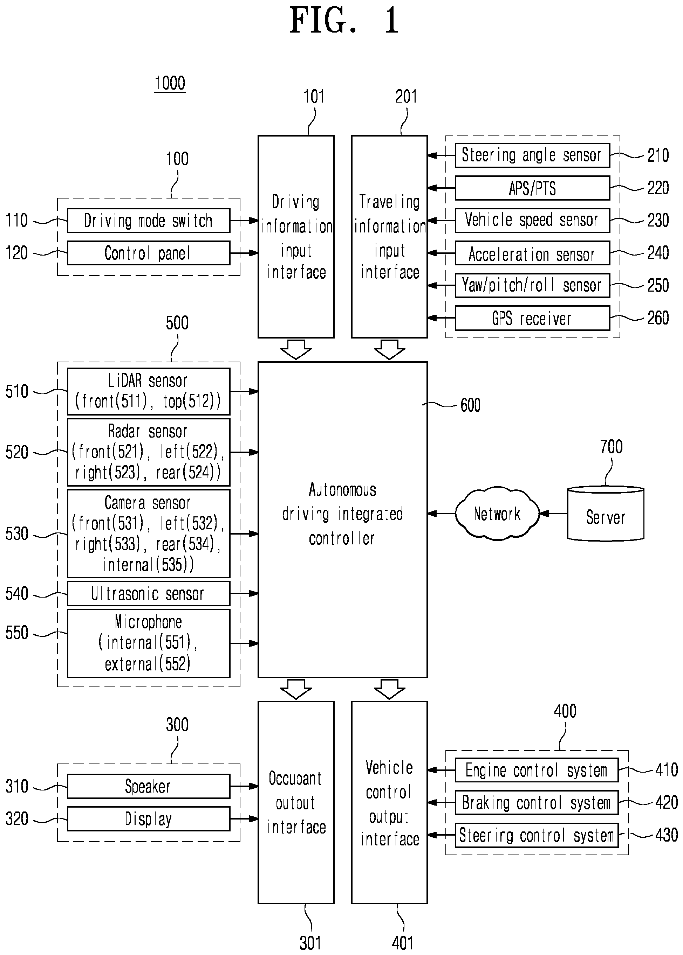

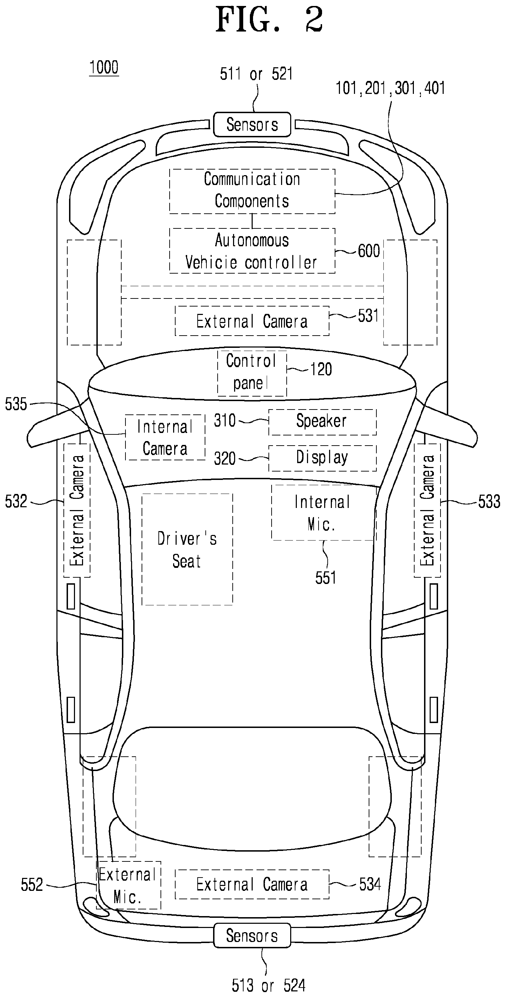

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

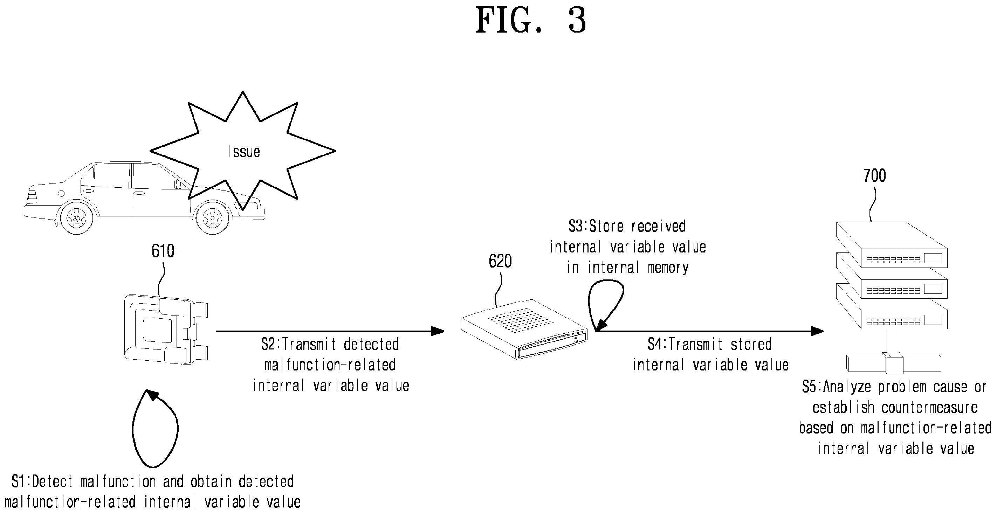

FIG. 3 illustrates operations related to detection of a malfunction of a control device and obtaining and transmission of internal variables based on the detected malfunction according to a first embodiment of the present disclosure.

A control device 610 may be one of control devices installed in the vehicle. As an example, the control device 610 may include a BDC.

The control device 610 performs control operations for various functions related to a body of the vehicle and is designed to process functions previously handled by individual control devices in an integrated manner. Accordingly, the functions of the individual control devices become processed by the control device 610 in a centralized manner, and an expansion of functions of the control device 610 and an increase in the complexity of a software logic are inevitable. Therefore, errors of existing individual components of the vehicle or respective control devices thereof are all transferred to the control device 610, and the control device 610 also performs numerous computational processes because of softwareization of vehicle control, so that there is a very high possibility that the control device will malfunction.

Accordingly, the present disclosure proposes to define the malfunction of the control device 610 and to match one or more internal variables related to each malfunction with the malfunction. Then, when the malfunction of the control device 610 is detected, one or more internal variables related to the detected malfunction or their values may be transmitted to a further device 620 and then be transmitted again to an external server 700. The server 700 may analyze a cause of the malfunction of the control device 610 and provide a countermeasure corresponding thereto.

In the present disclosure, the internal variables may include variables defined or used in a computational process for vehicle control of the control device 610. That is, the internal variables may include variables used to process a logic of software related to body control in the control device 610.

For example, the malfunctions of the control device 610 and respective one or more internal variables related thereto may be classified as follows:

**[Table 1]**

| Malfunction identification number | Malfunction (phenomenon) | Internal variable identification number | Related internal variable name |
|---|---|---|---|
| 1 | Control device reset | 0 | Reset reason |
| | | 1 | Task called at reset time point from core0 |
| | | 2 | Task called immediately before reset time point from core0 |
| | | 3 | Task called at reset time point from core1 |
| | | 4 | Task called immediately before reset time point from core1 |
| | | ... | ... |
| 2 | Door lock phenomenon when FOB exists in vehicle | 0 | Remote key entry command |
| | | 1 | Manual access lock |
| | | 2 | Manual access open |
| | | 3 | Burglar alarm occurrence state |
| | | 4 | FOB distance |
| | | ... | ... |
| 3 | Vehicle unable to start when FOB exists | 0 | LF antenna error |
| | | 1 | LF driver state |
| | | 2 | Failure information |
| ... | ... | ... | ... |

Referring to Table 1, the internal variables for each malfunction may be set independently of each other. However, some internal variable may be matched to different malfunctions (phenomena).

In addition, the internal variables of each malfunction may be related to the malfunction or the malfunction phenomenon. That is, the internal variables used in the computational process for the vehicle control related to the malfunction may be set as internal variables for the corresponding malfunction.

In addition, for example, the malfunction of the control device 610 may be detected or recognized when a following state is detected or when a following value of an internal variable is obtained.

**[Table 2]**

| Malfunction identification number | Malfunction (phenomenon) | Detection condition identification number | Detection condition |
|---|---|---|---|
| 1 | Control device reset | 0 | Obtaining preset internal variable value related to control device reset |
| | | 1 | Obtaining variable value that instructs reset of control device |
| | | ... | ... |
| 2 | Door lock phenomenon when FOB exists in vehicle | 0 | Detecting manual access lock variable value |
| | | 1 | Detecting burglar alarm occurrence state variable value |
| | | ... | ... |
| 3 | Vehicle unable to start when FOB exists | 0 | Detecting error state of LF IC |
| | | 1 | Detecting error state of RF IC |
| | | | |
| ... | ... | ... | ... |

The values of the internal variables, the state changes of the internal variables, or the like for detecting the malfunctions of the control device 610 are defined. When values of one or more internal variables match the preset values or present value changes are detected, it may be determined that a malfunction corresponding thereto has been detected. The internal variables used for detecting the malfunction may be set to correspond to a malfunction of corresponding body control.

In addition, a state of a driver, a component, or the like related to a relevant control command or control logic for detecting the malfunction of the control device 610 is defined. When the state (e.g., an operation error) of the driver, the component, or the like related to the control command or the control logic is detected, it may be determined that a malfunction corresponding thereto has been detected. The state of the driver, the component, or the like used for detecting the malfunction may be set to correspond to a malfunction of corresponding body control.

Alternatively, whether the malfunction of the control device 610 has occurred may be determined based on a response, a result value, or a state of the control command or the control logic for the body control of the control device 610. For example, whether the malfunction of the control device 610 has occurred may be determined based on a feedback signal of the driver or the component corresponding to the input control command. As another example, whether the malfunction of the control device 610 has occurred may be determined based on a value of a sensor that monitors the state change of the driver or the component corresponding to the control command or the control logic for the body control.

The control device 610 may be designed to detect the defined malfunction, and may be designed to obtain the internal variables related to the detected malfunction or their values when the malfunction is detected (S1).

The control device 610 may be designed to transmit the internal variables related to the detected malfunction or their values to the further device 620 (S2). The further device 620 may include a central communication unit (CCU).

The internal variables related to the malfunction of the control device 610 or their values transmitted from the control device 610 may be stored in a storage medium such as a memory of the device 620 (S3). The device 620 may be designed to transmit the stored internal variables or their values to the server 700 periodically or whenever the internal variables are received from the control device 610 (S4). Accordingly, the internal variables of the control device 610 may be transmitted to the server 700.

The internal variables are transmitted to the server 700 every time they are received because a memory capacity of the control device 610 is relatively small and thus the internal variables or their values are not able to be stored.

The server 700 may store the transmitted internal variables of the control device 610 or their values and record transmission times thereof. The recorded transmission times may be used to specify a time when the malfunction occurred when analyzing a cause related to the malfunction of the control device in the future. This provides efficiency in analyzing the cause of the malfunction.

The server 700 may be designed to obtain a countermeasure, i.e., corrected code or data, related to the malfunction of the control device based on the malfunction of the control device and the values of the one or more internal variables related thereto. Then, the server 700 may be designed to transmit the obtained code or data to the control device 610, so that the control device 610 may update the computational process for the vehicle control of the control device 610 using the code or the data. In one example, the server 700 may transmit the obtained code or data to the device 620, so that the device 620 may transmit the code or the data to the control device 610.

In one example, in Tables 1 and 2, the number of malfunctions of the control device 610 is exemplified as three, but related internal variables may be set for a larger number of malfunctions and conditions for malfunction detection may be set.

In addition, the data related to the malfunctions of the control device 610 as above (e.g., each malfunction and the internal variables related thereto, the conditions for detecting each malfunction, or the like) may be dynamically updated (added, deleted, changed, or the like). Accordingly, a preset list of the malfunctions, the internal variables related to each malfunction, or the conditions for detecting each malfunction of the control device 610 may be updated. That is, the control device 610 may be designed to update the preset malfunction list, the internal variables related to each malfunction, or the conditions for detecting each malfunction. Accordingly, it will be possible to actively cope with additional malfunctions, additions or changes in causes of each malfunction (i.e., changes in internal variables for analyzing the causes), or additions or changes in conditions for detecting each malfunction that may occur as logic or computation related to the body control becomes more diverse and complex.

In one example, the update of the malfunction list, the internal variables related to each malfunction, or the conditions for detecting each malfunction may be triggered by an input of an update command related to each malfunction. The update command related to each malfunction may be input from outside the control device 610. For example, the update of the malfunction list may be triggered by an update command related to each malfunction from the server 700.

Accordingly, the control device 610 may be designed to add, delete, or change the matching relationship between the malfunction and the internal variables related thereto, or the conditions for detecting the malfunction. The control device 610 may be designed to store information regarding the matching relationship between the malfunction and the internal variables related thereto in the storage medium such as the memory.

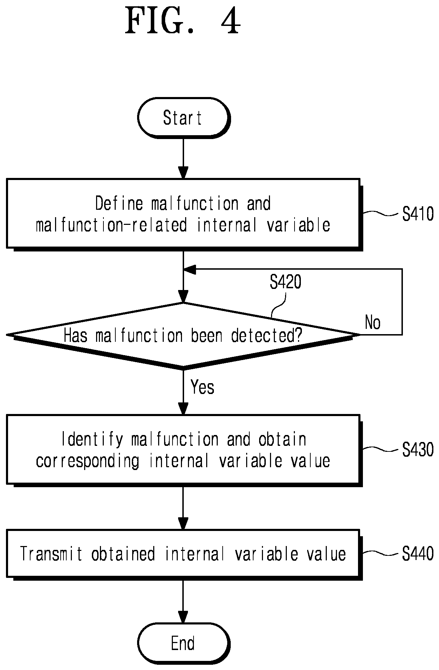

FIG. 4 is a flowchart illustrating a method for detecting a malfunction of a control device and obtaining and transmitting internal variables based on the detected malfunction according to a first embodiment of the present disclosure.

The method in FIG. 4 may be performed by the control device 620 or the processor of the control device. For simplicity of description, the method will be described below as being performed by the "control device 610".

The control device 610 may be designed to define each malfunction and the internal variables related to each malfunction (S410). In addition, the control device 610 may be designed to define the conditions for detecting each malfunction. In one example, each malfunction, the internal variables related to each malfunction, or the conditions for detecting each malfunction may be set or defined based on an instruction or a command of the server 700.

The control device 610 may be designed to detect each malfunction (S420).

As each malfunction is detected, the control device 610 may be designed to identify the malfunction and obtain the values of the one or more internal variables corresponding to the identified malfunction (S430).

Then, the control device 610 may be designed to transmit the obtained values of the internal variable(s) to the server 700 or to the further device 620 (S440).

As such, the malfunction of the control device 610 is detected, and the internal variables related to the detected malfunction are transmitted to the server 700 via the device 620 or directly, so that the server 700 may perform an analysis on the malfunction of the control device 610 and establish a countermeasure for the malfunction based on the analysis.

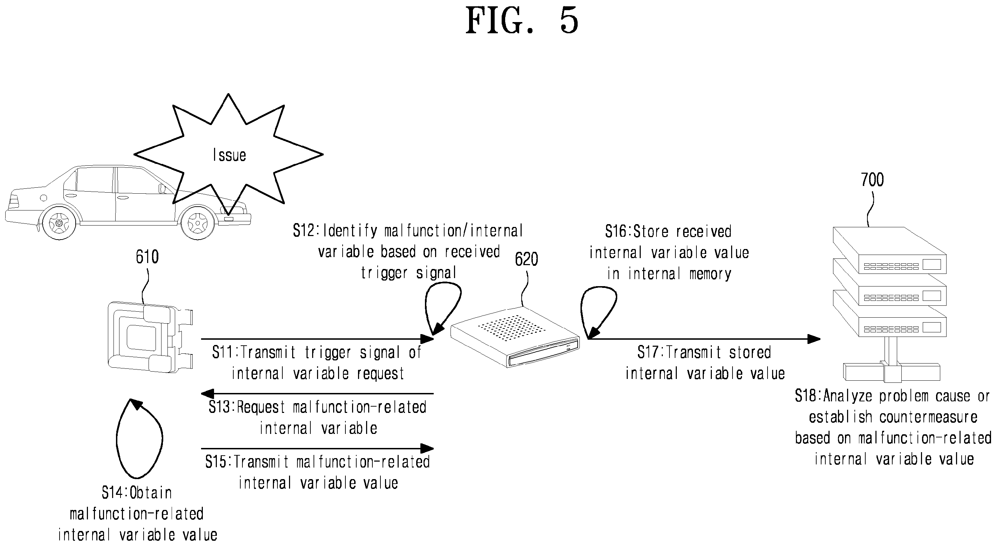

FIG. 5 illustrates operations related to detection of a malfunction of a control device and obtaining and transmission of internal variables based on the detected malfunction according to a second embodiment of the present disclosure.

The control device 610 may be one of the control devices installed in the vehicle. As an example, the control device 610 may include the BDC. For a description of the control device 610, refer to the description referring to FIG. 3.

The embodiment in FIG. 5 differs from FIG. 3 in that a request for the internal variables related to the malfunction of the control device 610 is transmitted from the further device 620 in the embodiment in FIG. 5. However, even in this case, the device 620 transmits the request for the internal variables to the control device 610 based on a trigger signal transmitted from the control device 610.

To this end, in the embodiment in FIG. 5, in addition to the matching relationship as described above in Table 1, the signal triggering the request for the internal variables related to the malfunction of the control device may be set.

**[Table 3]**

| Malfunction identification number | Malfunction (phenomenon) | Trigger signal requesting internal variables related to malfunction |
|---|---|---|
| 1 | Control device reset | Software version indication signal |
| | | ... |
| 2 | Door lock phenomenon when FOB exists in vehicle | Burglar alarm state signal |
| | | ... |
| 3 | Vehicle unable to start when FOB exists | Authentication failure signal |
| | | ... |
| | | ... |
| ... | ... | ... |

That is, the separate signal that triggers to request the internal variables related to the malfunction of the control device 610 or their values may be set, and the device 620 may be designed to request the control device 610 to provide the internal variables related to the malfunction or their values corresponding to the detected trigger signal when the corresponding trigger signal is detected. In one example, not only a value or a level of the corresponding trigger signal, but also a change in the value of the corresponding trigger signal may be used as trigger conditions. For example, when a preset value of the trigger signal changes from 1 to 0, the device 620 may be designed to request the control device 610 to provide an internal variable related to the malfunction or a value thereof corresponding to the preset trigger signal (or the change in the value of the trigger signal).

The signal that triggers to request the internal variables related to the malfunction (hereinafter, referred to as the "trigger signal") may be a signal related to the malfunction. The trigger signal may include a signal exchanged between the malfunctioning driver or component related to the vehicle control and the control device 610. For example, the trigger signal may include a CAN signal output by the control device 610.

In addition, the trigger signal may be related to the internal variables related to the malfunction described above. For example, the trigger signal may include a signal output based on the internal variables related to the malfunction.

In one example, although one trigger signal corresponds to one malfunction of the control device in Table 3, one or more trigger signals may correspond to one malfunction.

In addition, as described above, the data related to the malfunctions (e.g., each malfunction, the internal variables related thereto, or the conditions for detecting each malfunction) may be dynamically updated (added, deleted, changed, or the like), and the trigger signal for the request of the internal variables related to each malfunction described with reference to Table 3 may also be updated (added, deleted, changed, or the like). Accordingly, the trigger signal for the request of the internal variables related to each malfunction of the control device 610 may be updated. That is, the control device 610 may be designed to update the trigger signal for the request of the internal variables related to each malfunction. The control device 610 may be designed to transmit the updated trigger signal for the request of the internal variables related to each malfunction to the device 620. Accordingly, it will be possible to actively cope with the additional malfunctions, the additions or the changes in the causes of each malfunction (i.e., the changes in the internal variables for analyzing the causes), or the additions or the changes in the conditions for detecting each malfunction that may occur as the logic or the computation related to the body control becomes more diverse and complex.

In one example, the update of the trigger signal for the request of the internal variables related to each malfunction may be triggered by an input of an update command related to each malfunction. The update command related to each malfunction may be input from outside the control device 610. For example, the update of the malfunction list may be triggered by the update command related to each malfunction from the server 700.

Hereinafter, a description will be made with reference to FIG. 5.

The device 620 may be designed to receive the trigger signal for the request of the internal variables from the control device 610 (S11). The trigger signal may identify or specify the malfunction of the control device 610 or the internal variables related to the malfunction, and accordingly, the device 620 may request the control device 610 to provide the internal variables related to the corresponding malfunction. Control device-related state information corresponds to the trigger signal for the request of the internal variables related to the malfunction described above.

The trigger signal may be the signal related to the malfunction. In addition, the trigger signal may be related to the internal variables related to the malfunction. For example, the trigger signal may include the signal output based on the internal variables related to the malfunction.

The device 620 may be designed to identify the malfunction of the control device or identify the internal variables related to the malfunction in response to the received trigger signal (S12). To this end, the mapping relationship between the malfunction and the trigger signal corresponding thereto as shown in Table 3 may be stored in the storage medium such as the memory of the device 620.

Then, the device 620 may be designed to request the control device 610 to provide the internal variables related to the malfunction (S13). At this time, the device 620 may transmit only information regarding the malfunction or may transmit information regarding the internal variables related to the malfunction.

The control device 610 may be designed to obtain the internal variables related to the malfunction or their values (S14).

The control device 610 may be designed to transmit the internal variables related to the malfunction or their values to the device 620 (S15). The device 620 may include the central communication unit (CCU).

The device 620 may receive the internal variables related to the detected malfunction or their values, and store them in the storage medium such as the memory of the device 620 (S16). The device 620 may be designed to transmit the stored internal variables to the server 700 periodically or whenever the internal variables are received from the control device 610 (S17). Accordingly, the internal variables of the control device 610 or their values may be transmitted to the server 700.

The internal variables are transmitted to the server 700 every time they are received because the memory capacity of the control device 610 is relatively small and thus the internal variables or their values are not able to be stored.

The server 700 may store the transmitted internal variables of the control device 610 or their values and record the transmission times thereof. The recorded transmission times may be used to specify the time when the malfunction occurred when analyzing the cause related to the malfunction of the control device in the future. This provides the efficiency in analyzing the cause of the malfunction.

The server 700 may be designed to obtain the countermeasure, i.e., the corrected code or data, related to the malfunction of the control device based on the malfunction of the control device and the values of the one or more internal variables related thereto. Then, the server 700 may be designed to transmit the obtained code or data to the control device 610, so that the control device 610 may update the computational process for the vehicle control of the control device 610 using the code or the data. In one example, the server 700 may transmit the obtained code or data to the device 620, so that the device 620 may transmit the code or the data to the control device 610.

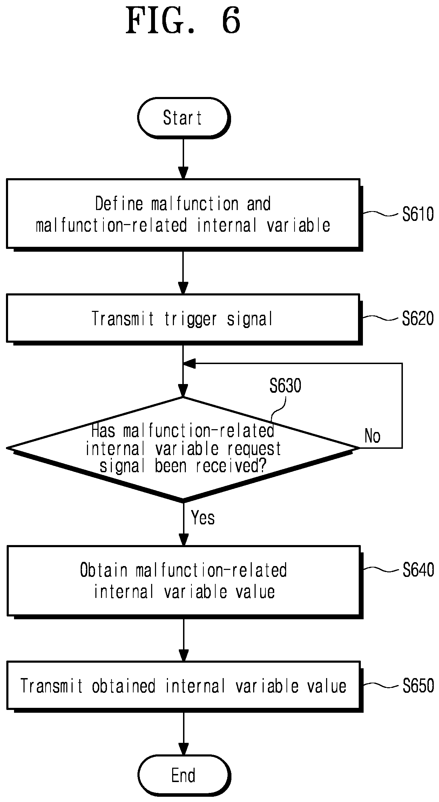

FIG. 6 is a flowchart illustrating a method for detecting a malfunction of a control device and obtaining and transmitting internal variables based on the detected malfunction according to a second embodiment of the present disclosure.

The method in FIG. 6 may be performed by the control device 610 or the processor of the control device. For simplicity of description, the method will be described below as being performed by the "control device 610".

The control device 610 may be designed to define each malfunction and the internal variables related to each malfunction (S610).

The control device 610 may be designed to transmit the trigger signal for the request of the internal variables related to each malfunction of the control device to the further device 620 (S620). The trigger signal for the request of the internal variables related to each malfunction may be the CAN signal, which causes the device 620 to identify or detect the malfunction related to the control device or to request the control device 610 to provide the internal variables related to the identified or detected malfunction.

The trigger signal may be the signal related to the malfunction. In addition, the trigger signal may be related to the internal variables related to the malfunction. For example, the trigger signal may include the signal output based on the internal variables related to the malfunction. Accordingly, the control device 610 may be designed to identify or detect the malfunction, and transmit the trigger signal for the request of the internal variables when the malfunction is identified or detected.

The trigger signal may include information regarding the detected malfunction, or may include information regarding the one or more internal variables related to the malfunction. Alternatively, the trigger signal may include the signal output based on the internal variables related to the malfunction.

The control device 610 may be designed to check whether the request for the internal variables related to the malfunction has been received (S630).

As the request for the internal variables related to the malfunction is received, the control device 610 may be designed to identify the malfunction and obtain the values of one or more internal variables corresponding to the identified malfunction (S640).

Then, the control device 610 may be designed to transmit the obtained values of the internal variable(s) to the server 700 or the device 620 (S650).

As such, the malfunction of the control device 610 is detected, and the internal variables related to the detected malfunction are transmitted to the server 700 via the device 620 or directly, so that the server 700 may perform the analysis on the malfunction of the control device 610 and establish the countermeasure for the malfunction based on the analysis.

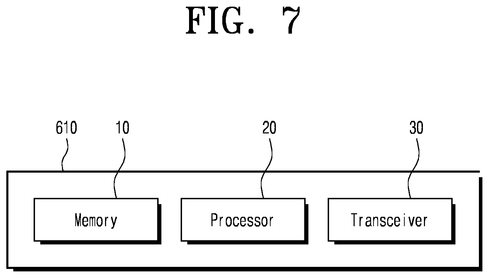

FIG. 7 illustrates a block diagram of a control device related to an embodiment of the present disclosure.

The control device 610 corresponds to the device designed to perform the control of the vehicle. The control device 610 may include a memory 10 designed to store information regarding the predefined malfunction list and the one or more internal variables corresponding to each malfunction. In addition, the control device 610 may include a transceiver 30 designed to transmit or receive the data related to the malfunction. In addition, the control device 610 may include a processor 20 designed to control the vehicle, detect the malfunction of the control device 610, or obtain the internal variables related to the malfunction.

The processor 20 may be designed to detect whether the malfunction included in the predefined malfunction list has occurred. Whether the malfunction has occurred may be determined based on the predefined values of the internal variables for detecting the malfunction, the state changes of the internal variables, or the like, as described above in Table 2. That is, the processor 20 may be designed to detect whether the malfunction has occurred based on the values of the one or more internal variables corresponding to each malfunction or the changes in the values of the one or more internal variables.

Alternatively, the processor 20 may be designed to detect whether the malfunction has occurred based on the feedback signal of the component or the actuator corresponding to the input control command or the value of the sensor that monitors the state change corresponding to the input control command.

The processor 20 may be designed to obtain the values of the one or more internal variables corresponding to the detected malfunction upon the detection of the occurrence of the malfunction. Here, the one or more internal variables may include the variables defined or used in the computational process for the vehicle control of the control device.

Then, the processor 20 may be designed to transmit the obtained values of the one or more internal variables to the further device. The obtained values of the one or more internal variables may be used to analyze the malfunction. In addition, the values of the one or more internal variables transmitted to the further device may be transmitted to the server by the further device.

In one example, the processor 20 may be designed not to directly detect whether the malfunction has occurred, but to receive the request for the one or more internal variables related to the malfunction or their values from the further device 620 and transmit the values of the one or more internal variables related to the malfunction to the further device 620 in response to the request.

However, the processor 20 may be designed to transmit the signal for triggering the request for the one or more internal variables related to the malfunction (i.e., the trigger signal) to the further device 620. That is, the processor 20 may be designed to transmit the trigger signal for the request of the one or more internal variables related to the malfunction to the further device 620 via the transceiver 30.

In this case, the information regarding the predefined malfunction list and the one or more internal variables corresponding to each malfunction may be stored in the memory 10. Alternatively, information regarding the predefined malfunction list and the trigger signal for the request of the internal variables corresponding to each malfunction may be stored in the memory 10. Based on this, the control device 610 may be designed to detect the malfunction and then transmit the trigger signal for the request of the one or more internal variables related to the malfunction to the further device 620.

As the trigger signal transmitted to the further device 620 indicates one malfunction in the predefined malfunction list or one or more internal variables related to the malfunction, the processor 20 may be designed to receive the request for the one or more internal variables related to the indicated malfunction from the further device 620. In response to the request for the internal variables, the processor 20 may be designed to obtain the values of the one or more internal variables. Then, the processor 20 may be designed to transmit the values of the one or more internal variables to the further device 620 via the transceiver 30. Here, the one or more internal variables may include the variables defined or used in the computational process for the vehicle control of the control device 610.

The control device 610 may be designed to perform operations in association with the content of the present disclosure related to FIGS. 3 to 6, which has not been described with reference to FIG. 7.

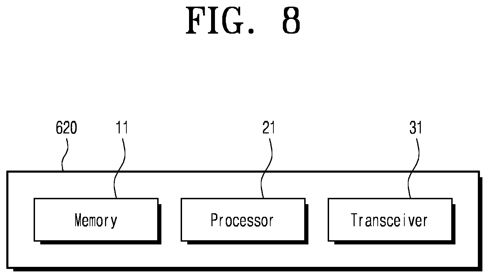

FIG. 8 illustrates a block diagram of a communication device related to an embodiment of the present disclosure.

The communication device 620 may include a memory 11 designed to store the information regarding the signal for triggering the request for the internal variables related to the malfunction (hereinafter, the "trigger signal") and the one or more internal variables related to the malfunction corresponding thereto.

In addition, the communication device 620 may include a transceiver 31 designed to transmit and receive the data related to the malfunction.

The communication device 620 may include a processor 21 designed to identify the one or more internal variables corresponding to the received trigger signal and generate the request for the identified one or more internal variables.

The processor 21 may be designed to receive the state signal from the control device 610.

The processor 21 may be designed to identify the one or more internal variables indicated by the received state signal. Then, the processor 21 may be designed to generate the request for the identified one or more internal variables.

The processor 21 may be designed to transmit the request for the identified one or more internal variables to the control device 610.

The processor 21 may be designed to receive the values of the one or more internal variables from the control device 610. Here, the one or more internal variables may include the variables defined or used in the computational process for the vehicle control of the control device. The processor 21 may be designed to transmit the received values of the one or more internal variables to the server 700.

The communication device 620 may be designed to perform operations in association with the content of the present disclosure related to FIGS. 3 to 6, which has not been described with reference to FIG. 8.

In one example, as another embodiment of the present disclosure, a mobile entity 1000 including the aforementioned devices 610 and 620 is proposed. In the present disclosure, the mobile entity includes all devices capable of moving, such as a vehicle, a robot, and an aircraft.

In the present document, the control device or the "device" for detecting the malfunction of the control device and transmitting the information regarding the detected malfunction or each component included therein has been described as performing the control, but the "device" and the components included therein are only names and the scope of rights is not dependent on them.

That is, the proposed technology may be realized with other names besides the device, the processor, or the control device. In addition, the method, the scheme, or the like described above may be realized by code readable by software, a computer, other machine, device, or the like for detecting the malfunction of the control device and transmitting the internal variables related to the detected malfunction.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

## Claims

1. A control device for reporting a malfunction related to vehicle control, the control device comprising:
a transceiver configured to transmit and receive malfunction-related data;
a memory configured to store information related to a predefined malfunction list and one or more internal variables corresponding to each malfunction in the predefined malfunction list; and
a processor configured to:
detect whether a malfunction included in the predefined malfunction list has occurred;
obtain values of one or more internal variables corresponding to the detected malfunction upon the detection of the occurrence of the malfunction; and
transmit the obtained values of the one or more internal variables to another device,
wherein each malfunction in the predefined malfunction list is set to correspond to one or more internal variables, and
wherein the one or more internal variables include at least one variable defined or used in a computational process for the vehicle control of the control device.

2. The control device of claim 1, wherein the processor is further configured to utilize the obtained values of the one or more internal variables to analyze the malfunction.

3. The control device of claim 1 or 2, wherein the processor is further configured to update at least one of the predefined malfunction list, the one or more internal variables corresponding to the malfunction, or a condition for detecting the occurrence of the malfunction.

4. The control device of any one of claims 1 to 3, wherein the processor is further configured to detect whether the malfunction has occurred based on values of the one or more internal variables corresponding to each malfunction or a change in the values of the one or more internal variables.

5. The control device of any one of claims 1 to 4, wherein the processor is further configured to detect whether the malfunction has occurred based on a state of a driver or a component corresponding to each malfunction.

6. A control device for reporting a malfunction related to vehicle control, the control device comprising:
a transceiver configured to transmit and receive malfunction-related data;
a memory configured to store information related to a predefined malfunction list and a trigger signal or one or more internal variables corresponding to each malfunction in the predefined malfunction list; and
a processor configured to:
control the transceiver to transmit a trigger signal for an internal variable request corresponding to the malfunction to a central communication device;
receive a request for one or more internal variables related to a malfunction corresponding to the trigger signal from the central communication device;
obtain values of the requested one or more internal variables; and
control the transceiver to transmit the obtained values of the internal variables to the central communication device,
wherein each malfunction in the predefined malfunction list is set to correspond to one or more internal variables, and
wherein the one or more internal variables include at least one variable defined or used in a computational process for the vehicle control of the control device.

7. The control device of claim 6, wherein the processor is further configured to utilize the obtained values of the one or more internal variables to analyze the malfunction.

8. The control device of claim 6 or 7, wherein the processor is further configured to update at least one of the predefined malfunction list, the one or more internal variables corresponding to the malfunction, or a condition for detecting the occurrence of the malfunction.

9. The control device of any one of claims 6 to 8, wherein the processor is further configured to detect whether the malfunction has occurred based on values of the one or more internal variables corresponding to each malfunction or a change in the values of the one or more internal variables.

10. The control device of any one of claims 6 to 9, wherein the processor is further configured to detect whether the malfunction has occurred based on a state of a driver or a component corresponding to each malfunction.

11. A communication device for reporting a malfunction related to vehicle control, the communication device comprising:
a transceiver configured to transmit and receive malfunction-related data;
a memory configured to store information related to a signal for triggering a malfunction-related internal variable request and one or more malfunction-related internal variables corresponding to the signal; and
a processor configured to:
control the transceiver to receive the signal for triggering the malfunction-related internal variable request from a control device;
identify a malfunction indicated by the received signal or one or more internal variables related to the malfunction;
control the transceiver to transmit a request for the one or more internal variables to the control device; and
control the transceiver to receive values of the one or more internal variables from the control device,
wherein the malfunction is set to correspond to one or more internal variables,
wherein the one or more internal variables include at least one variable defined or used in a computational process for the vehicle control of the control device.

12. The communication device of claim 11, wherein the processor is further configured to utilize the values of the one or more internal variables to analyze the malfunction.
